# EUROPEAN PATENT SPECIFICATION

(11) **EP 0 584 294 B1**
(45) Date of publication and mention of the grant of the patent: **25.11.1998**
(21) Application number: 93901180.5
(22) Date of filing: 17.12.1992
(51) Int. Cl.: G09B 19/00, G09B 9/00

(54) **MODULAR FIRE TRAINER**
MODULARER BRANDBEKAEMPFUNGSTRAINER
SYSTEME MODULAIRE POUR L'ENTRAINEMENT DES POMPIERS

(30) Priority: 06.01.1992 US 817435
(43) Date of publication of application: 02.03.1994
(73) Proprietor: SYMTRON SYSTEMS, INC., Fair Lawn, NJ 07410 (US)
(72) Inventor: MUSTO, Dominick, J., Middlesex, NJ 08846 (US); ROGERS, William, Hopatcong, NJ 07843 (US); ERNST, James, J., Livingston, NJ 07039 (US)
(74) Representative: Stevens, Ian Edward
(86) International application number: PCT/US92/10980
(87) International publication number: WO 93/14481

(56) References cited:
- EP-A- 0 146 465
- EP-A- 0 146 465
- WO-A-92/05531
- DE-A- 2 951 624
- US-A- 4 526 548
- US-A- 4 983 124
- US-A- 5 173 052

## Description

The invention relates to a modular fire fighter trainer, and in particular the invention relates to a modular fire fighter trainer having one or more training compartment modules, a control room module, and at least one interconnect module.

### BACKGROUND OF THE INVENTION

The prior art fire fighter trainer is described in U.S. Patent Number 4,861,270 issued August 29, 1989 and in U.S. Patent Number 4,983,124 issued January 8, 1991 which is a continuation-in-part of the aforementioned patent.

The prior art fire fighter trainer includes one or more training compartments having contents including one or more items chosen from a group of simulated burnable items including at least furniture and fixtures and equipment, a smoke generating means having an outlet disposed in the training compartment, a flame generating means having an outlet disposed in the training compartment, and a sensing and control means having a series of multisensor assemblies disposed in the training compartment and connecting to main control panel.

One problem with the prior art trainer is that it is necessary to provide one or more buildings for enclosing the training compartments. Another problem is that it is necessary to custom design each of the required buildings. A further problem is that the ratio of field labour to total field and shop labour is a relatively high ratio.

DE-A-2951624 discloses a training unit intended for providing practice in the use of breathing apparatus by fire-fighting personnel. The unit is made up of two vehicle units, each having an open longitudinal side, which are placed side by side, with an inflatable seal between them.

### SUMMARY OF THE INVENTION

According to the present invention, a modular fire fighter trainer is provided. This trainer comprises three types of prefabricated building subassemblies. The trainer comprises one or more prefabricated training compartment building subassembly, each having a training compartment with one or more simulated burnable items, and also having an equipment room with a smoke generating means which has an outlet disposed in the training compartment and with a flame generating means which has an outlet disposed in the training compartment adjacent to each simulated burnable item. The trainer also comprises at least one prefabricated control room building subassembly, and comprises one or more prefabricated interconnect room building subassembly each having a stairway and door openings.

By using the prefabricated building subassemblies or modules, the prior art problem of providing a custom designed building for the training compartments, as required, is avoided. The problem of a relatively high ratio of field labour for field erection of the custom designed fire training building to total field and shop labour for installation of the modular fire fighter trainer is avoided.

The foregoing and other objects, features and advantages will be apparent from the following description of the preferred embodiment of the invention.

### DESCRIPTION OF THE PREFERRED EMBODIMENT

A modular fire fighter trainer or building assembly includes in this embodiment four training compartment subassemblies or modules and includes one control room subassembly or module and includes two interconnect subassemblies or modules. Other configurations using the same modules, or different modules, or a different number of modules, may be used to create a different training building assembly, or to vary the assembly. A first training compartment module is similar to the other three modules, except that the simulated burnable items in each module may be different. The two interconnect modules are similar. The trainer is a prefabricated modularized live fire training device.

During construction of the trainer or assembly, each of the modules is lifted into place using a crane, which has a cable.

The assembly may also have a facade for providing a more realistic exterior surface, as required. The assembly also has multiconductor cables or electrical lines to interconnect each training module to the control room module. The assembly also has a ladder and walkway to access two of the modules at the rear thereof.

The first training compartment module includes a training compartment or room and an equipment compartment or room. The training compartment has a fireproof mockup device, or simulated burnable item or other items. The burnable item is chosen from a group of simulated burnable items such as furniture and fixtures and equipment. The burnable item includes burner equipment which emits flames, and which has extinguishing agent detectors and safety monitors. The training compartment has a training entrance doorway. The training entrance doorway is designed to interconnect with a doorway of an interconnect module.

The equipment compartment has a burner control enclosure. The enclosure includes a pilot flame generator and pilot monitor, and control valves. The equipment compartment also has a smoke generator. The smoke generator has electronic components and interface connections. The equipment compartment also has a ventilation unit.

The control room module has an operator's control panel or console, monitoring equipment, safety equipment and communication equipment.

The first interconnect module which is similar to the second interconnect module, has a hallway, a stairway, and a typical doorway which is one of six doorways in this particular case. The first interconnect module may have a passive structural piece, such as an electrical heater, or furniture piece, or the like. The interconnect modules are designed so that training compartment modules can be connected to it, with doorways aligned, so as to form a fire fighter trainer where trainees can enter the trainer and search for and extinguish one or more fires as in an actual structural fire.

In summary, the invention relates to a fire fighter trainer, which has burner equipment fuelled by propane vapour or other fuel and which has one or more mockup devices or simulated burnable items in order to simulate actual fires in such items. The trainer is a modular fire fighter training assembly, having prefabricated subassemblies which can be easily transported by truck or rail and can be delivered at a construction site or facility and then assembled. The assembly, in this embodiment, includes four training subassemblies or modules and one control module, and two interconnect modules.

Each of the training modules contains one or more live fire training simulators or mockups. The mockup can generate flames and sense the type of extinguishing agent being used. The equipment room contains the smoke generator and burner control equipment, which output in the training compartment. The equipment compartment has interconnections to an electrical cable and to a burner propane gas supply.

The training compartments of the training modules contain one or more of the following types of fires:
Class A fires, such as a bedroom fire, or storage room fire, or a wood structure fire;
Class B fires, such as a spilled fuel fire, or kitchen grease fire; Case C fires, such as an electrical panel fire or an electronics device fire, or a transformer fire; and
Class D fires, such as a magnesium fire, or other like burning metal fire.

The control room module has equipments which permit an instructor to control the fires and smoke in the training modules and the smoke in the interconnect modules. A panel receives signals from extinguishing agent detectors and like detectors in each training room, and sends signals, as provided by the instructor, to the smoke generator and the burner control and the ventilators.

The interconnect modules, each of which contains a hallway, a stairway and doorways, serve to connect the training compartments of the training modules, in order to form a complete trainer building assembly in which trainees can progress in search of fires as in a conventional training building.

Advantages of the assembly are indicated hereafter.
A) A combination building and mechanical and electrical system or assembly consisting of prefabricated modules is provided.
B) The need for a custom designed building for the mechanical and electrical subsystems of the trainer is avoided.
C) The ratio of field labour to total field and shop labour to furnish a fire fighter trainer at a construction site is minimized.
D) Various building layouts and shapes can be provided by combining and arranging and rearranging the training, control room and interconnect subassemblies or modules.
E) The trainer can be expanded in the future using additional modules.

While the invention has been described in its preferred embodiment, it is to be understood that the words which have been used are words of description rather than limitation and that changes may be made within the purview of the appended claims without departing from the scope of the invention.

For example, propane liquid or natural gas, or the like, can be used in place of propane gas.

As another example, a manual type of control panel can be used in place of the automatic control panel.

As a further example, each of the training, control room and interconnect modules can be shipped in pieces or sections and then assembled at the construction site to form prefabricated modules or subassemblies which can be assembled to form the trainer, instead of shipping prefabricated training, control room and interconnect modules to the construction site which are assembled to form the trainer.

## Claims

1. A modular fire fighter trainer comprising
a prefabricated first training compartment subassembly having a training compartment with at least one simulated burnable item with a burner; and with extinguishing agent detectors and safety monitors; and also having an equipment room with a smoke generator outputting into the training compartment and with a burner control connection to the burner, and having a ventilation system;
a prefabricated second control subassembly having a control room with a control unit for connection to the burner control enclosures and the smoke generators for operation by an instructor;
a prefabricated third interconnect subassembly having a hallway connecting to the training room and having an exterior doorway and having an interior stairway; and
a prefabricated additional subassembly disposed above the prefabricated third interconnect subassembly and having access to said interior stairway.

2. A trainer as claimed in claim 1, wherein the prefabricated additional subassembly comprises prefabricated fourth and fifth and sixth subassemblies structurally identical to the first training compartment subassembly; the fourth subassembly being disposed in one case above the first subassembly; and the fifth subassembly being disposed alongside the first subassembly; and the sixth subassembly being disposed above the fifth subassembly for providing a two-story trainer.

3. A trainer as claimed in claim 2, including:
a prefabricated seventh subassembly structurally identical to the third interconnect subassembly and disposed above the third interconnect subassembly and having a hallway connection to the training rooms of the fourth and sixth subassemblies, in one case.

4. A trainer as claimed in any one of claims 1 to 3, wherein each of the various subassemblies is a prefabricated modularized subassembly having a size for positioning in place using a crane.

5. A trainer as claimed in any one of claims 1 to 4, wherein each of the various subassemblies is a prefabricated unit having a size for shipping by truck to a construction site.

6. A trainer as claimed in any one of claims 1 to 5 including:
interior or exterior multiconductor cables having respective conductors connecting to the various burner control enclosures and smoke generators from the control panel, for the purpose of permitting an instructor to control and monitor training exercises.

7. A trainer as claimed in any one of claims 1 to 6 including:
a facade covering all or part of the exterior of the trainer assembly to enhance its appearance and training value.

## Patentansprüche

1. Modulare Feuerwehrübungsanlage, umfassend
eine vorgefertigte erste Übungsabteil-Baugruppe, die ein Übungsabteil mit mindestens einem simulierten brennbaren Gegenstand mit einem Brenner aufweist; sowie mit Löschmitteldetektoren und Sicherheitsüberwachungseinrichtungen; und die auch einen Geräteraum mit einem in das Übungsabteil ausstoßenden Rauchgenerator und mit einer Brennersteuerverbindung zum Brenner aufweist, und ein Belüftungssystem aufweist;
eine vorgefertigte zweite Steuer-Baugruppe, die eine Steuerwarte mit einer Steuereinheit zur Verbindung mit den Brennersteuergehäusen und den Raucherzeugern zur Bedienung durch einen Ausbilder aufweist;
eine vorgefertigte dritte Verbindungs-Baugruppe, die einen mit dem Übungsraum verbundenen Korridor aufweist und einen Außeneingang aufweist und eine Innentreppe aufweist; und
eine vorgefertigte zusätzliche Baugruppe, die über der vorgefertigten dritten Verbindungs-Baugruppe angeordnet ist und einen Zugang zu der besagten Innentreppe aufweist.

2. Übungsanlage nach Anspruch 1, bei der die vorgefertigte zusätzliche Baugruppe eine vorgefertigte vierte und fünfte und sechste Baugruppe umfasst, die mit der ersten Übungsabteil-Baugruppe baulich identisch sind; wobei die vierte Baugruppe in einem Fall über der ersten Baugruppe angeordnet ist; und die fünfte Baugruppe neben der ersten Baugruppe angeordnet ist; und die sechste Baugruppe über der fünften Baugruppe angeordnet ist, um eine zweistöckige Übungsanlage bereitzustellen.

3. Übungsanlage nach Anspruch 2, einschließend:
eine vorgefertigte siebente Baugruppe, die in einem Fall mit der dritten Verbindungs-Baugruppe baulich identisch und über der dritten Verbindungs-Baugruppe angeordnet ist und eine Korridorverbindung mit den Übungsräumen der vierten und sechsten Baugruppe aufweist.

4. Übungsanlage nach einem beliebigen der Ansprüche 1 bis 3, bei der jede der verschiedenen Baugruppen eine vorgefertigte modularisierte Baugruppe ist, die eine Größe zum Abstellen unter Verwendung eines Krans aufweist.

5. Übungsanlage nach einem beliebigen der Ansprüche 1 bis 4, bei der jede der verschiedenen Baugruppen eine vorgefertigte Einheit ist, die eine Größe zum Transport durch Lastkraftwagen zu einer Baustelle aufweist.

6. Übungsanlage nach einem beliebigen der Ansprüche 1 bis 5, einschließend:
innere oder äußere Mehrleiterkabel, die jeweilige Leiter aufweisen, die vom Steuerpult aus mit den verschiedenen Brennersteuergehäusen und Raucherzeugern verbunden sind, zu dem Zweck, es einem Ausbilder zu ermöglichen, Ausbildungsübungen zu steuern und zu überwachen.

7. Übungsanlage nach einem beliebigen der Ansprüche 1 bis 6, einschließend:
eine Fassade, welche die gesamte oder einen Teil der Außenseite der Übungseinheit bedeckt, um ihr Erscheinungsbild und ihren Ausbildungswert zu verbessern.

## Revendications

1. Système modulaire pour l'entraînement des pompiers comprenant :
- un premier sous-ensemble préfabriqué à compartiment d'entraînement ayant un compartiment d'entraînement avec au moins un article pouvant brûler de façon simulée avec un brûleur et comprenant des détecteurs d'agents d'extinction et des contrôleurs de sécurité et comprenant également une salle d'équipements dotée d'un générateur de fumée sortant dans le compartiment d'entraînement et comprenant une connexion de commande du brûleur reliée au brûleur et ayant un système de ventilation ;
- un deuxième sous-ensemble préfabriqué de commande comprenant une salle de commande avec une unité de commande pour la connexion aux enceintes de commande du brûleur et aux générateurs de fumée fonctionnant sous le contrôle d'un instructeur ;
- un troisième sous-ensemble préfabriqué d'interconnexion ayant un corridor reliant à la salle d'entraînement et ayant une entrée de porte extérieure et ayant un escalier intérieur ; et
- un sous-ensemble préfabriqué supplémentaire disposé au-dessus du troisième sous-ensemble préfabriqué d'interconnexion et ayant accès audit escalier intérieur.

2. Système d'entraînement selon la revendication 1, où le sous-ensemble supplémentaire préfabriqué se compose d'un quatrième, d'un cinquième et d'un sixième sous-ensembles identiques, du point de vue structure, au premier sous-ensemble à compartiment d'entraînement ; le quatrième sous-ensemble étant disposé, dans un cas, au-dessus du premier sous-ensemble ; le cinquième sous-ensemble étant disposé le long du premier sous-ensemble ; le sixième sous-ensemble étant disposé au-dessus du cinquième sous-ensemble pour fournir un système d'entraînement à deux étages.

3. Système d'entraînement selon la revendication 2, comprenant :
- un septième sous-ensemble préfabriqué identique, du point de vue structure, au troisième sous-ensemble d'interconnexion et disposé au-dessus du troisième sous-ensemble d'interconnexion et ayant, dans un des cas, une liaison par corridor aux salles d'entraînement des quatrième et sixième sous-ensembles.

4. Système d'entraînement selon l'une quelconque des revendications 1 à 3, où chacun des différents sous-ensembles est un sous-ensemble modularisé, préfabriqué ayant une taille pour la mise en place à l'aide d'une grue.

5. Système d'entraînement selon l'une quelconque des revendications 1 à 4, où chacun des différents sous-ensembles est une unité préfabriquée ayant une taille permettant l'expédition par camion jusqu'à un site de construction.

6. Système d'entraînement selon l'une quelconque des revendications 1 à 5, comprenant :
- des câbles multiconducteurs intérieurs ou extérieurs ayant des conducteurs respectifs reliant aux différentes enceintes de commande du brûleur et à des générateurs de fumée, depuis le panneau de commande, afin de permettre à un instructeur de commander et de surveiller des exercices d'entraînement.

7. Système d'entraînement selon l'une quelconque des revendications 1 à 6, comprenant :
- une façade recouvrant la totalité ou une partie de l'extérieur de l'ensemble d'entraînement pour lui donner un meilleur aspect et augmenter sa valeur d'entraînement.
